# DEMANDE DE BREVET EUROPEEN

(11) **EP 2 919 037 A1**
(43) Date de publication de la demande: **16.09.2015**
(21) Numéro de dépôt: 14305365.0
(22) Date de dépôt: 13.03.2014
(51) Int. Cl.: G01T 1/20

(54) **Procédé d'optimisation de la collection de photons dans des cristaux scintillateurs, cristal et utilisations associés**

(71) Demandeur: Université de Technologie de Troyes, 10010 Troyes Cédex (FR); CERN, Organisation Européenne pour la Recherche Nucléaire, 1211 Genève (CH); SILSEF, 74160 Archamps (FR); Laboratoire Chimie de la Matière Condensée de Paris (LCMCP), 75231 Paris Cedex 05 (FR)
(72) Inventeur: Lerondel, Gilles, 10800 St Julien les Villas (FR); Le Cunff, Loic, 60290 Neuilly-sous-Clermont (FR); Salas Montiel, Rafael, 10000 TROYES (FR); Lecoq, Paul, F-01170 CHEVRY (FR); Turover, Daniel, 94160 Saint Mandé (FR); Grosso, David, 91630 Cheptainville (FR)
(74) Mandataire: Thomas, Nadine

(57) **Abrégé**

L'invention concerne un procédé d'optimisation de la gestion de photons dans des cristaux scintillateurs caractérisé par les étapes suivantes : - déposer un matériau (5) ayant un indice de réfraction "n" égal environ à l'indice de réfraction d'un cristal scintillateur (1) sur une face (2) dudit cristal scintillateur; - structurer ledit matériau (5) via un moyen de structuration ; - ladite structuration étant apte à créer des structures (6) de tailles sub-diffractives dans le matériau (5) afin de permettre une adaptation de l'indice de réfraction entre le cristal scintillateur (1) et le matériau (5) sur la face (2). L'invention concerne encore les moyens de structuration du matériau (5) ainsi que le cristal scintillateur ainsi structuré. L'invention concerne en outre l'utilisation d'un cristal scintillateur structuré selon le procédé ci-dessus dans des systèmes de détections de particules et d'imagerie médicale, des systèmes de sécurités et pour la surveillance liée aux rayonnements.

## Description

### DOMAINE TECHNIQUE DE L'INVENTION

L'invention se rapporte au domaine des scintillateurs. Plus particulièrement, l'invention se rapporte à un procédé d'optimisation de la gestion de la collection de photons dans des cristaux scintillateurs par structuration sub-diffractive. L'invention concerne en outre des moyens pour réaliser cette structuration.

Un scintillateur est un matériau ayant une propriété de scintillation suite à un dépôt d'énergie. Un rayonnement ionisant déposant de l'énergie dans ce milieu lors d'interactions produit ainsi une faible quantité de lumière dans le cristal scintillateur. L'enregistrement de cette lumière permet sa détection.
Les matériaux scintillateurs sont très utilisés en instrumentation nucléaire pour mesurer l'intensité de rayonnements gamma, électronique ou neutronique. Ils sont aussi utilisés dans la détection de rayons X, en diffractométrie par exemple. Les scintillateurs les plus répandus sont l'Iodure de sodium (NaI(TI)), l'Iodure de césium (CsI(TI)), le germanate de bismuth (BGO), l'OxyorthoSilicate de Lutécium (LSO), ou encore le tungstate de cadmium (CdWO4).

L'optimisation de la collection de photons dans ces cristaux scintillateurs est essentielle pour la détection de rayonnement (rayons gamma, rayons X...) à la fois en quantité (pour améliorer la sensibilité des systèmes de détection) mais également en temps. Le paramètre temps est essentiel dans les systèmes détection à temps de vol.

La Tomographie à Emission de Positon (TEP) est un système à temps de vol. Dans ce système deux photons sont émis simultanément dans des directions opposées. La détection en coïncidence de ces deux photons indique théoriquement sur quelle droite l'annihilation a eu lieu. Un système à temps de vol permet de mesurer la différence de temps d'arrivée des deux photons. (Voir le fonctionnement des systèmes de détections TEP).

Les applications des scintillateurs concernés par l'invention sont la détection de particules mais également l'imagerie médicale, et plus généralement la sécurité et la surveillance liées aux rayonnements nucléaire, radiologique, biologique et chimique (NRBC).

### ETAT DE LA TECHNIQUE ANTERIEURE

La détection du rayonnement se fait soit en optimisant le temps de parcours du rayonnement dans le cristal (utilisation de barreau) soit en optimisant la surface (galette), soit les deux. Pour assurer une grande efficacité de conversion des rayonnements de haute énergie, les cristaux scintillateurs à base de matériau très dense (quaternaire) sont privilégiés. Cette configuration n'est toutefois pas favorable à la collection des photons une fois émis.

Les cristaux scintillateurs sont des matériaux denses et leur densité est associée à un indice de réfraction élevé qui limite l'extraction des photons. Par ailleurs, la forme du barreau distribue la génération de photons dans l'espace et donc dans le temps. A titre d'exemple, avec un élément de LSO (OxyorthoSilicate de Lutécium) de 2x2 mm et de 2 cm de long ayant un indice de réfraction de 1.85 et considérant une génération de photons homogène sur la section efficace, on obtient en sortie une efficacité de collection de 7,9% c'est-à-dire que moins de 10% des photons sont collectés à leur première incidence sur la face de sortie du cristal scintillateur.

Pour optimiser la collection de photons, plusieurs approches ont déjà été proposées. La plus simple des méthodes consiste à utiliser un gel d'indice entre la face de sortie du scintillateur et la fenêtre du photo-détecteur. Cette méthode est d'abord proposée pour minimiser la réflexion sur la fenêtre d'entrée du photo-détecteur mais elle permet également de diminuer la variation d'indice en sortie du barreau. Par exemple avec un gel d'indice 1.4, on obtient une efficacité de diffraction théorique de 27%.

La deuxième approche consiste à recouvrir d'une feuille de réflecteur ou de diffuseur les faces latérales du cristal scintillateur pour empêcher la fuite de photons par ces faces (40% dans l'exemple donné). On aboutit à une augmentation de 50% en combinant avec l'utilisation du gel de couplage.

D'autres approches consistent à recouvrir chaque face du cristal de différents réflecteurs comme du Tyvek®, du Mylar aluminisé, du Tedlar et/ou un absorbant comme de la peinture noire ou du Teldar noir. Aux endroits de contacts optiques il peut y avoir couplage optique par de la graisse optique (indice de refraction 1.5) ou de la colle optique (thermoplastique Meltmount ; indice de refraction n = 1.7) . Il y a aussi inclusion d'un guide optique fait de différentes matière comme plexiglas, le quartz etc. pour des conditions de contact optique avec le photomultiplicateur PM avec de la graisse optique seulement. Des fenêtres de tailles différentes entre la face de sortie du cristal et la photocathode de PM entouré de matières réfléchissante, diffusantes ou absorbantes (Tyvek®, du Mylar aluminé, du Tedlar, etc) peuvent être utilisées.

Enfin une méthode plus élaborée et plus difficile à mettre en oeuvre consiste à utiliser en face de sortie du cristal scintillateur un cristal photonique dont l'objectif est d'autoriser des modes d'extraction de la lumière normalement interdits par la loi de Snell-Descartes. Expérimentalement l'efficacité d'extraction est ainsi multipliée par deux. Une démonstration de principe a été réalisée par excitation optique de la fluorescence sur deux surfaces, l'une structurée et l'autre non structurée.

A ce jour tous les systèmes de détection utilisent un gel ou une colle de couplage d'indice proche de 1.5, associés à différents types d'enrobages latéraux ; Tywek®, Téflon®, Mylar aluminisé, etc... Cela permet de récupérer une partie de la lumière, mais pas totalement, et surtout au prix d'un étalement dans le temps qui est fortement préjudiciable aux performances temporelles de ces détecteurs, connus.

### EXPOSE DE L'INVENTION

L'invention a pour but d'améliorer le rendement lumineux d'au moins 50% et d'atteindre pour les scintillateurs couramment utilisés des résolutions temporelles dans la gamme de quelques dizaines de picosecondes.

Plus particulièrement, l'invention a pour objet un procédé d'optimisation de la gestion de photons dans des cristaux scintillateurs caractérisé par les étapes suivantes :
- déposer un matériau ayant un indice de réfraction "n" égal environ à l'indice de réfraction d'un cristal scintillateur, sur une face dudit cristal scintillateur ;
- structurer ledit matériau via un moyen de structuration ;
- ladite structuration étant apte à créer des structures de tailles sub-diffractives dans le matériau afin de permettre une adaptation de l'Indice de réfraction entre le cristal scintillateur et le matériau sur ladite face.

Par structuration, on entend, au sens de la présente demande, une structuration conduisant à la formation de structure présentant des dimensions submicroniques ou nanométriques notamment petites devant la longueur d'onde.

De préférence, les structures présentent une forme conique ou sensiblement conique dont la base présente un diamètre au plus égal à (lambda/2n), de préférence (lambda/4n) où lambda est la longueur d'onde des photons.

En outre, la hauteur desdits cônes est au moins égale à (lambda) afin de permettre une transition lente.

De plus, la face du cristal scintillateur sur laquelle le matériau est déposé est une face de sortie.

En outre, la face du cristal scintillateur sur laquelle le matériau est déposé peut-être une face latérale.

Sans sortir du cadre de l'invention, la face du cristal scintillateur sur laquelle le matériau est déposé, peut être la face d'entrée.

De plus, un gel adaptateur d'indice est déposé sur le matériau structuré pour permettre une modulation entre l'indice du cristal et l'indice dudit gel adaptateur.

Par ailleurs, l'indice final suite à la modulation entre l'indice du cristal et l'indice du gel est modulé en jouant sur la forme tronquée des cônes du matériau structuré.

Selon un mode particulier de réalisation, le matériau présente des structures sub-diffractives sous forme d'un réseau de distribution blasé ayant un seul ordre.

Préférentiellement un pas du réseau de diffraction blasé est compris entre lambda/2 et lambda/2n, où lambda est la longueur d'onde des photons.

Selon un mode de réalisation de l'invention une face d'entrée du cristal scintillateur est métallisée.

En outre, le matériau est structuré par transfert d'un masque réalisé au préalable, ou encore la structuration du matériau est réalisée par nano-impression.

L'invention concerne encore un cristal scintillateur structuré par le procédé ci-dessus.

L'invention concerne en outre l'utilisation d'un cristal scintillateur structuré selon le procédé ci-dessus dans des systèmes de détections de particules et d'imagerie médicale, des systèmes de sécurités et pour la surveillance liée aux rayonnements.

### BREVE DESCRIPTION DES FIGURES

D'autres caractéristiques, détails et avantages de l'invention ressortiront à la lecture de la description qui suit, en référence aux figures annexées, qui illustrent:
- la figure 1 illustre la structuration en forme de cône pour adaptation parfaite d'indice en face de sortie du cristal ; et
- la figure 2 montre la structuration latérale en forme de réseau de diffraction blasé pour rediriger les photons vers la face de sortie du cristal.

### DESCRIPTION DETAILLEE DE L'INVENTION

Un scintillateur est un instrument composé d'un matériau qui émet de la lumière suite à un dépôt d'énergie par interaction d'un rayonnement. Les scintillateurs sont utilisés en général de deux manières :
- sous la forme d'un écran fluorescent, permettant la visualisation à l'oeil nu ; cet écran est souvent couplé à une caméra numérique (type CCD) qui permet une acquisition informatique ;
- sous la forme d'un détecteur à scintillation : la lumière (photons) émise par le matériau scintillant est amplifiée par un photomultiplicateur (PM), puis les photons sont comptés. On estime ainsi le flux de photons dans le scintillateur. Une relation simple existant entre la quantité de lumière produite et l'énergie déposée étant à l'origine du phénomène de scintillation, ceci permet de déterminer l'énergie du rayonnement détecté (technique de spectroscopie ou spectrométrie).

L'objet de la présente invention concerne l'amélioration de la gestion de photons dans les cristaux scintillateurs en utilisant des structures sub-diffractives dans l'air. Cette amélioration porte sur deux aspects.

Le premier aspect concerne l'amélioration de la collection en face de sortie par adaptation d'indice, en utilisant des structures sub-diffractives de forme conique.

Un cristal scintillateur est caractérisé par un instrument ayant plusieurs faces (entrée, sortie et latérales).

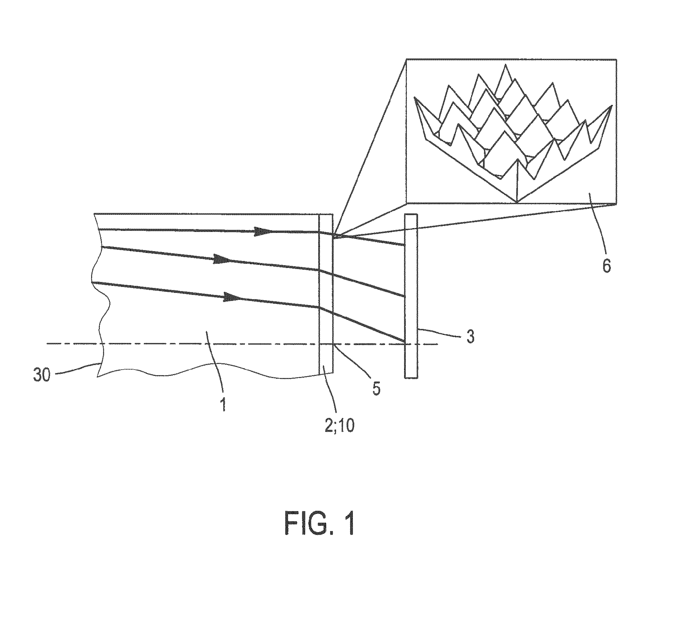

La figure 1 représente un cristal scintillateur structuré conforme à un premier mode de réalisation de l'invention. Ce cristal scintillateur 1 comprend une face 2 sur laquelle un matériau 5 sera déposé. Le matériau 5 doit avoir un indice de réfraction comparable à celui du cristal scintillateur (idéalement le même); le matériau 5 doit être un matériau structurable. Comme la structuration de matériaux très denses tels que celle des scintillateurs est quasi impossible, selon l'invention on procède à la structuration du matériau 5. Un photo détecteur (CCD)3 est en outre prévu, ici disposé à proximité de la face 2.

Selon un premier mode de réalisation, la face 2 sur laquelle le matériau 5 est déposé est la face dite de sortie 10. Des structures 6 réalisées sur le matériau 5 sont sub-diffractives, de forme conique. Ces structures 6 permettent une adaptation d'indice parfaite entre le matériau 5 et le scintillateur 1. L'adaptation d'indice permet d'améliorer la collection des photons sur la face de sortie 10 du scintillateur. Avec cette méthode, on peut obtenir une limite théorique de 61% dans le cas du scintillateur tel qu'un élément de LSO de 2x2 mm et 2 cm de long. La base des structures 6 en forme de cône ne doit pas excéder (λ/2n) où λ est la longueur d'onde des photons, et n est l'indice de réfraction du scintillateur. De préférence la base des structures 6 est équivalente à λ/4n. Afin de permettre une transition lente, la hauteur des cônes doit être suffisante. Typiquement la hauteur est d'au moins lambda λ.

Un gel adaptateur d'indice pourra être déposé et combiné au réseau de cônes formant la structure sub-diffractive 6 pour permettre une modulation entre l'indice du cristal et l'indice du gel adaptateur. L'utilisation du gel adaptateur donne une forme tronquée aux cônes et en jouant sur ces formes tronquées des cônes, l'indice final pourra être également modulé. A noter que la forme des sections des cônes n'a pas d'importance dans la limite de l'indice effectif.

En outre, le même résultat est obtenu quelle que soit la face utilisée dans le cristal. Pour des raisons pratiques un photo-détecteur 3 ne doit pas être positionné sur la face d'entrée, mais il pourrait très bien être positionné latéralement pour réduire l'encombrement.

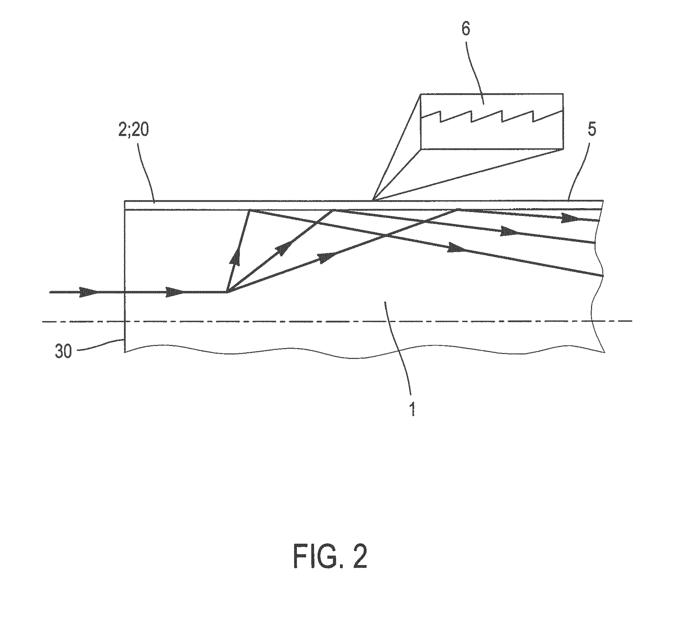

Le deuxième aspect de l'invention concerne la diminution de la distribution temporelle. Pour ce faire, on renvoie directement vers la face de sortie 10 les photons réfléchis sur les faces latérales 20. Comme le montre la figure 2, on utilise pour ce faire une distribution de réseau de diffraction blasé n'ayant qu'un seul ordre dans le matériau 5 de fort indice (pas d'ordre de diffraction dans l'air). Dans ce mode de réalisation de l'invention, le matériau 5 est structuré et les structures sub-diffractives 6 sont en forme d'un réseau de distribution blasé.

De manière générale un réseau blasé nommé aussi un réseau échelette est un réseau de diffraction plan ayant un profil en dents de scie et fonctionnant en réflexion. On l'éclaire avec une lumière monochromatique de longueur d'onde λ sous incidence normale. Ce réseau est 100% efficace aux grandes périodes : il diffracte toute la lumière dans son ordre utile, l'ordre 1 en général.

Le pas du réseau de diffraction des structures 6 est compris entre λ /2 et λ /2n, lambda étant la longueur d'onde des photons. Dans le cas d'un élément LSO, typiquement cette longueur d'onde λ est 420nm. La hauteur du réseau n'est pas trop importante. Pour éviter une adaptation d'indice et ainsi augmenter le nombre de photons perdus par les faces latérales 20, la hauteur du réseau est inférieure à λ.

En plus de réduire la dispersion temporelle, cette deuxième approche permet également d'augmenter le nombre de photons collectés vers l'avant. Idéalement 100% des photons qui s'échappent par les faces latérales 20. Dans la pratique 50% en considérant l'efficacité des réseaux blasés. Dans le cas de l'exemple cela permettrait d'obtenir une efficacité totale d'environ 28% (à comparer aux 7,9% sans structuration latérale).

Les deux aspects proposés dans la présente invention sont génériques et adaptables quelle que soit la nature du matériau utilisé connaissant son indice de réfraction. Elles peuvent être combinées entre elles.

En outre la face d'entrée 30 du cristal peut être structurée ; dans ce cas on récupère moins de photons mais on améliore la résolution temporelle. Cette possibilité fait partie de l'invention.

La solution technique, objet de la présente invention pourrait également être combinée à d'autres méthodes. Comme par exemple une métallisation de la face d'entrée pour éviter la perte des photons par sa face avant 30 ce qui permettrait de récupérer 7.9% de photons supplémentaires dans le cas de l'exemple.

Par ailleurs, la structuration est réalisée par des techniques de lithographies connues. Dans le cadre de la présente invention, on peut structurer le matériau 5 soit par transfert d'un masque réalisé au préalable soit directement par nano-impression. Cette dernière méthode est la plus simple, dans le cas où le matériau 5 est gaufré.

Contrairement à des techniques de lithographie qui reproduisent les motifs d'un masque dans une résine par contraste chimique, la nano-impression est une technique de lithographie qui produit des motifs dans la résine par contraste topographique. En effet le masque est remplacé par un moule présentant des motifs tridimensionnels sur sa face active (face en contact avec la résine). Ce moule est pressé dans la résine qui remplit alors ses cavités.

L'invention concerne encore un cristal scintillateur structuré par le procédé ci-dessus. Ainsi que l'utilisation dudit cristal scintillateur dans des systèmes de détection de particules, imagerie médicale, et des systèmes de sécurité et pour la surveillance liée aux rayonnements.

## Revendications

1. Procédé d'optimisation de la gestion de photons dans des cristaux scintillateurs **caractérisé par** les étapes suivantes :
- déposer un matériau (5) ayant un indice de réfraction "n" égal environ à l'indice de réfraction d'un cristal scintillateur (1), sur une face (2) dudit cristal scintillateur;
- structurer ledit matériau (5) via un moyen de structuration ;
- ladite structuration étant apte à créer des structures (6) de tailles sub-diffractives dans le matériau (5) afin de permettre une adaptation de l'indice de réfraction entre le cristal scintillateur (1) et le matériau (5) sur la dite face (2).

2. Procédé d'optimisation selon la revendication 1 dans lequel les structures (6) présentent une forme conique ou sensiblement conique dont la base présente un diamètre au plus égal à (lambda/2n), de préférence (lambda/4n) où lambda est la longueur d'onde des photons.

3. Procédé d'optimisation selon la revendication 1 ou 2 dans lequel la hauteur desdits cônes est au moins égale à (lambda) afin de permettre une transition lente.

4. Procédé d'optimisation selon l'une des revendications 1 à 3 dont la face (2) est une face de sortie (10) du cristal scintillateur (1).

5. Procédé d'optimisation selon l'une des revendications 1 à 3 dont la face (2) est une face latérale (20) du cristal scintillateur (1).

6. Procédé d'optimisation selon l'une des revendications 1 à 3 dont la face (2) est une face d'entrée (30).

7. Procédé d'optimisation selon l'une des revendications précédentes dans lequel un gel adaptateur d'indice est déposé sur le matériau structuré (5) pour permettre une modulation entre l'indice du cristal (1) et l'indice dudit gel adaptateur.

8. Procédé selon la revendication précédente dans lequel l'indice final suite à la modulation entre l'indice du cristal et l'indice du gel est modulé en jouant sur la forme tronquée des cônes du matériau structuré.

9. Procédé selon la revendication 1 dans lequel le matériau (5) présente des structures sub-diffractives (6) sous forme d'un réseau de distribution blasé avec un seul ordre.

10. Procédé selon la revendication 9 dans lequel un pas dudit réseau de diffraction blasé est compris entre lambda/2 et lambda/2n, où lambda est la longueur d'onde des photons.

11. Procédé selon l'une des revendications précédentes dans lequel une face d'entrée du cristal scintillateur (1) est métallisée.

12. Procédé selon l'une des revendications précédentes dans lequel le matériau (5) est structuré par transfert d'un masque réalisé au préalable.

13. Procédé selon l'une des revendications 1 à 11 dans lequel le matériau (5) est structuré par nano-impression.

14. Cristal scintillateur (1) structuré par le procédé selon l'une des revendications 1 à 13.

15. Utilisation d'un cristal scintillateur selon la revendication 14 dans des systèmes de détections de particules et/ou d'imagerie médicale et/ou dans des systèmes de sécurité et/ou pour la surveillance liée aux rayonnements.
